# EUROPÄISCHE PATENTSCHRIFT

(11) **EP 2 522 877 B1**
(45) Veröffentlichungstag und Bekanntmachung des Hinweises auf die Patenterteilung: **20.07.2016**
(21) Anmeldenummer: 12165470.1
(22) Anmeldetag: 25.04.2012
(51) Int. Cl.: F16M 7/00, F16M 9/00

(54) **Schwingungsisolationseinrichtung**
Oscillation dampening device
Dispositif d'isolation des oscillations

(30) Priorität: 13.05.2011 DE 102011050355
(43) Veröffentlichungstag der Anmeldung: 14.11.2012
(73) Patentinhaber: Isoloc Schwingungstechnik GmbH, 70499 Stuttgart (DE)
(72) Erfinder: Schürrle, Uwe, 70499 Stuttgart (DE)
(74) Vertreter: Fleck, Hermann-Josef

(56) Entgegenhaltungen:
- DE-A1- 2 828 714
- FR-A1- 2 402 039
- FR-A1- 2 515 718
- GB-A- 1 148 983

## Beschreibung

Die Erfindung bezieht sich auf eine Schwingungsisolationseinrichtung zum schwingungsgedämpften Aufnehmen einer Masse mit mindestens einer Isolationseinheit, die auf zumindest zwei Schrägflächen mindestens eines Schräglagers angeordnete elastische und dämpfende Isolierelemente trägt.

Eine Schwingungsisolationseinrichtung dieser Art ist in der GB 1 148 983 A gezeigt. Bei dieser bekannten Schwingungsisolationseinrichtung ist in einer Ausgestaltung eine Tragebasis einer Brücke mit einem V-förmigen Kanal versehen, auf dessen schrägen Flanken Paare von federnden Einheiten angeordnet sind, auf welchen ein V-förmiger Vorsprung mit seinen seitlichen Flanken aufliegt. Die federnden Einheiten umfassen einen Gummiblock und Reibungsflächen mit geringem Reibwiderstand.

Die DE 28 28 714 A1 zeigt eine Einrichtung zur schalldämmenden Lagerung schwerer Bauteile mittels einer zwischen dem Bauteil und dem Untergrund vorgesehenen elastischen Zwischenlage, die als am Umfang des Bauteils angeordnetes, schräg gestelltes Gummi-Metall-Lager ausgebildet ist.

Weitere Schwingungsisolationseinrichtungen in einem Fundament mit schrägen Stützflanken zeigen die FR 2 515 718 A1 und die FR 2 402 039 A1.

Eine weitere Schwingungsisolationseinrichtung ist in der DE 102 33 804 B3 angegeben. Hierbei ist auf einem Grundträger eine Lagerblockeinheit mit quaderförmiger oder würfelförmiger Außenkontur aufgenommen, die sich aus vier Teilblöcken zusammensetzt und in ihrem Inneren eine sich nach oben öffnende pyramidenstumpfförmige Aufnahme mit schrägen Stützflächen aufweist. Auf den Stützflächen sind plattenförmige elastische und dämpfende Isolierelemente in Form von Elastomerkörpern angeordnet, auf denen ein Auflager zum Aufnehmen eines schwingungsisoliert zu lagernden Objekts abgestützt ist.

Die DE 42 13 656 C2 zeigt eine schwingungsdämpfende Montageverbundplatte mit einer Zwischenschicht aus Polymer zur schwingungstechnischen Entkopplung von Maschinenteilen bzw. Maschinen untereinander oder Maschinen bzw. Maschinenteilen gegenüber einem Fundament.

Bei stoß- und schlagartig arbeitenden Maschinen, wie Schmiedepressen, Transferpressen, Schmiedehämmern, Schlagscheren, Brechern, Walzwerken und dgl., treffen große Massen kurzzeitig aufeinander. Je nach Kraft-Zeit-Verlauf des Zusammentreffens können hierbei extrem hohe Kraftspitzen und Beschleunigungen auftreten, die die Umgebung stark erschüttern. Die Beanspruchung von Betondecken und Betonfundamenten können dabei Größenordnungen erreichen, die im Bereich auftretender Kräfte (Wirklinien) nicht nur zur Zermürbung des Betons an seiner Oberfläche, sondern auch zu Rissen und Brüchen im Fundament führen.

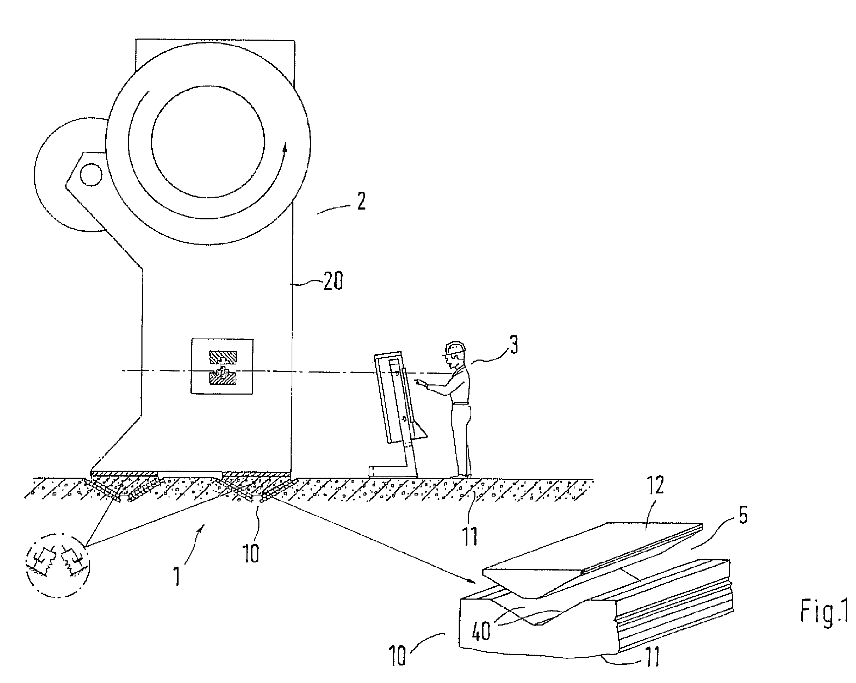

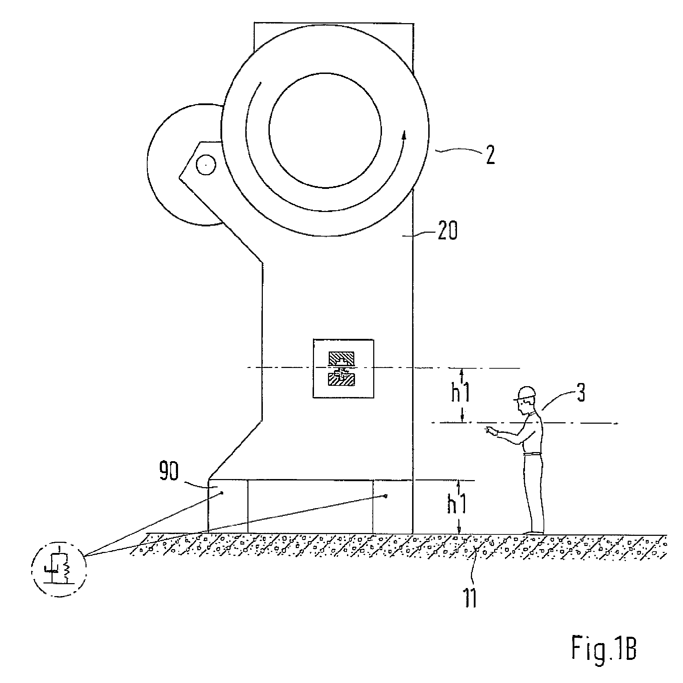

Schwingungsisolatoren der vorstehend genannten Art dienen dazu, solch große, schwere Maschinen schwingungsisoliert aufzustellen, wobei die dafür erforderlichen elastischen und dämpfenden Elemente (Feder-Dämpfer-Systeme), meist zwischen den Pressen-, Maschinen- oder Anlagenfüßen und den Betonfundamenten angeordnet werden. Um eine gute Stoß- und Schwingungsisolation zu erreichen, sind tiefe Eigenfrequenzen der Schwingungsisolationselemente anzustreben, die physikalisch bedingt relativ große Federwege erfordern, die die Schwingungsisolationselemente hoch aufbauen lassen. Für die Bediener der Maschinen oder für heutzutage meist verkettete Maschinen kann sich eine ungünstige Bauhöhe ergeben (vgl. Fig. 1 B), die durch zusätzliche konstruktive Maßnahmen, wie Podeste oder aufwändige und teure Stahlkonstruktionen ausgeglichen werden. Häufig scheitert eine Nachrüstung solcher Maschinen mit schwingungsisolierenden Elementen aus derartigen Überlegungen aus.

Neben dem Nachteil, dass bisher lsolationseinrichtungen insbesondere bei großen zu isolierenden Objekten hoch aufbauend und sehr groß sind, erfordern sie auch erheblichen Aufwand bei der Fertigung, da sie üblicherweise aus Stahl hergestellt werden und sehr schwer sind und Vollmaterial in diesen Dimensionen nur auf Spezialmaschinen mechanisch bearbeitet werden kann.

Der vorliegenden Erfindung liegt die Aufgabe zugrunde, eine Schwingungsisolationseinrichtung der eingangs genannten Art bereit zu stellen, die bessere konstruktive Abstimmungsmöglichkeiten auf sich stellende Schwingungsisolationsaufgaben ergibt.

Diese Aufgabe wird mit den Merkmalen des Anspruches 1 gelöst. Hierbei ist vorgesehen, dass die Schräglager in einem Betonfundament ausgebildet sind, wobei die Schrägflächen durch Formflächen des Betonfundaments gebildet sind.

Mit diesen Maßnahmen wird die Schwingungsisolationseinrichtung vorteilhaft in die örtliche Umgebung der zu isolierenden Masse bzw. des Objekts integriert, wobei das ohnehin anzufertigende und an die Erfordernisse anzupassende Betonfundament mit den Vorkehrungen für die Schwingungsisolationseinrichtung geplant und ausgeführt werden kann, wobei die schwingungsdämpfenden Isolierelemente mit dem Betonfundament verbunden bzw. an diesen fixiert werden können, so dass sie an geeigneten Stellen und in abgestimmten Größen zwischen dem Fundament und dem schwingungsisoliert anzuordnenden Objekt, wie z. B. Maschine oder auch Gebäude, integriert werden können. Mittels der schrägen Anordnung der Isolierelemente, insbesondere Elastomerplatten, ergibt sich vorteilhaft ein System, bei dem die zu lagernde Masse um die horizontalen Achsen entkoppelt wird.

Die Aufstellmöglichkeiten des Objekts einerseits und eine stabile Abstützung der schwingungsdämpfenden Isolierelemente andererseits werden dadurch begünstigt, dass die Schrägflächen in Vertiefungen des Betonfundaments ausgebildet sind, die bezüglich einer Nutzebene unter Flur liegen.

Für den Aufbau und die Funktion sind die Maßnahmen von Vorteil, dass die Schrägflächen eines jeweiligen Schräglagers nach Art von gegeneinander geneigten Seitenflächen eines dreieckförmigen oder trapezförmigen Prismas angeordnet sind, das bezüglich der in Schwerkraftrichtung zeigenden absoluten Vertikalen horizontal ausgerichtet ist, wobei die beiden Schrägflächen nach unten oder nach oben zueinander gerichtet sind.

Weitere vorteilhafte Ausgestaltungen für den Aufbau und die Funktion ergeben sich dadurch, dass die Schrägflächen eines jeweiligen Schräglagers nach Art von gegeneinander gerichteten Seitenflächen einer Pyramide oder eines Pyramidenstumpfes angeordnet und nach oben oder nach unten zueinander geneigt sind, wobei die Pyramidenform vorzugsweise regelmäßig ist.

Vorteilhafte Anpassungsmöglichkeiten an verschiedene Anforderungen ergeben sich ferner dadurch, dass die Schrägflächen von zumindest Abschnitten seitlicher Begrenzungsflächen der Vertiefungen gebildet sind oder dass sie an nach oben gerichteten Abschnitten des Betonfundamentes insbesondere innerhalb der Vertiefung gebildet sind.

Ist vorgesehen, dass auf den Schrägflächen des Betonfundaments Metallplatten befestigt sind, auf denen die Isolierelemente aufgebracht sind, wird mittels der Metallplatten, vorzugsweise Stahlplatten, der Druck gleichmäßig und großflächig im Beton verteilt und die bei der Verformung der Isolierelemente, speziell von Elastomeren, auftretenden Schubspannungen durch Querdehnungen werden in der Ebene aufgenommen bzw. nicht so stark behindert wie bei einer reinen Betonoberfläche, so dass Rissbildungen im Fundament zusätzlich vorgebeugt wird.

Ist des Weiteren vorgesehen, dass die Isolierelemente eines Schräglagers schwingungstechnisch über eine Druckeinheit miteinander gekoppelt sind, können sich durch die dabei entstehende Brückenverbindung über die Druckeinheit die einzelnen Elastomerfedern bei Belastung nicht so frei verformen wie bei Einzelbelastung, so dass sich Vorteile der Wirkungsweise ergeben.

Die Montage und die Funktion werden auch dadurch begünstigt, dass die Druckeinheit auf ihrer Oberseite mit einer ebenen horizontalen Auflagefläche versehen ist.

Weitere für den Aufbau und die Funktion vorteilhafte Ausgestaltungen bestehen darin, dass die Druckeinheit als Druckstück aus Metall oder Beton ausgebildet ist und dass bei Ausbildung aus Beton auf ihrer Oberseite eine Metallplatte verankert ist.

Eine weitere vorteilhafte Ausgestaltung mit günstigen Aufbaumöglichkeiten besteht darin, dass mehrere Schräglager über eine Aufnahmeplatte zu einem Schräglagerverbund miteinander gekoppelt sind.

Die Funktion und der Aufbau werden auch dadurch begünstigt, dass die Neigungswinkel der Schrägflächen in einer vertikalen Querebene gegenüber der Horizontalen (und damit auch Vertikalen) gleich groß sind.

Zu einer hohen Stabilität tragen die Maßnahmen bei, dass insbesondere im Bereich der Schrägflächen das Betonfundament aus schwundfreiem Beton hergestellt ist.

Vorteile beim Aufbau der Schwingungsisolationseinrichtung ergeben sich auch dadurch, dass die Isolierelemente als plattenartige Elastomerkörper mit parallel zur zugeordneten Schrägfläche liegender Oberseite und Unterseite ausgebildet sind. Auch werden dadurch vorteilhafte Anpassungsmöglichkeiten an unterschiedliche Anforderungen geboten.

Vorteilhafte Abstimmungsmöglichkeiten ergeben sich auch dadurch, dass die Elastomerkörper verschiedene Lagen von Elastomermaterial mit unterschiedlichen Schwingungs-/Dämpfungseigenschaften aufweisen.

Die Erfindung wird nachfolgend anhand von Ausführungsbeispielen unter Bezugnahme auf die Zeichnungen näher erläutert. Es zeigen:
- Fig. 1A: eine Szene mit einer schwingungsgedämpft gelagerten Maschine in seitlicher Ansicht und einer Schwingungsisolationseinrichtung im Querschnitt sowie mit Einzeldarstellungen zur Schwingungsisolationseinrichtung,
- Fig. 1B: eine Szene nach Fig. 1A, jedoch mit einer Schwingungsisolationseinrichtung nach dem Stand der Technik,
- Fig. 2: eine vergrößerte Darstellung eines Bereichs der Schwingungsisolationseinrichtung im Querschnitt,
- Fig. 3: eine Prinzipdarstellung zur Schwingungsisolationseinrichtung,
- Fig. 4: eine Prinzipdarstellung zur Wirkungsweise eines elastischen und dämpfenden Isolierelements in Form eines Elastomerkörpers,
- Fig. 5: verschiedene Ausführungsformen einer Schwingungsisolationseinheit der Schwingungsisolationseinrichtung und
- Fig. 6: ein mittels einer Schwingungsisolationseinrichtung schwingungsisoliert gelagertes Gebäude.

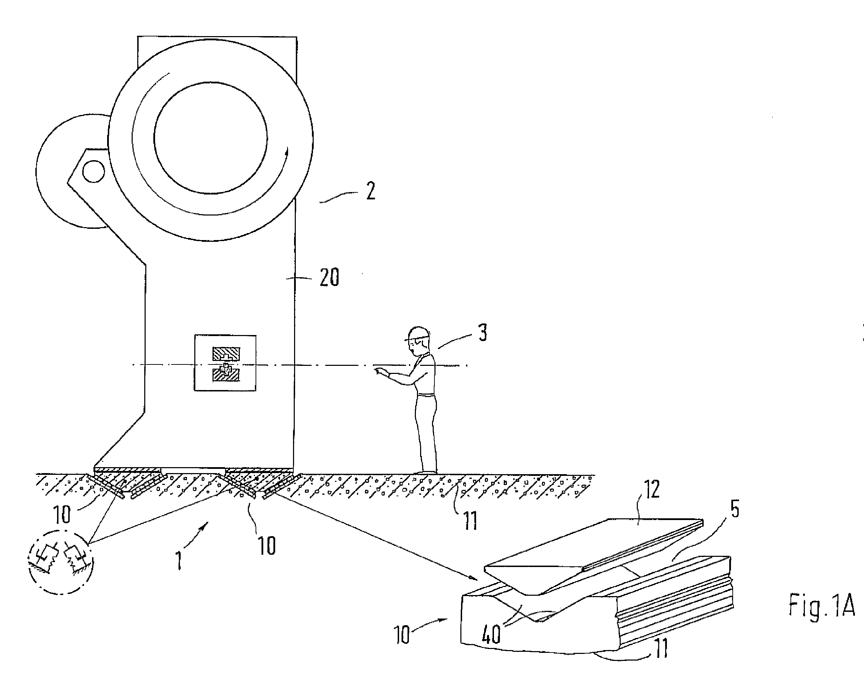

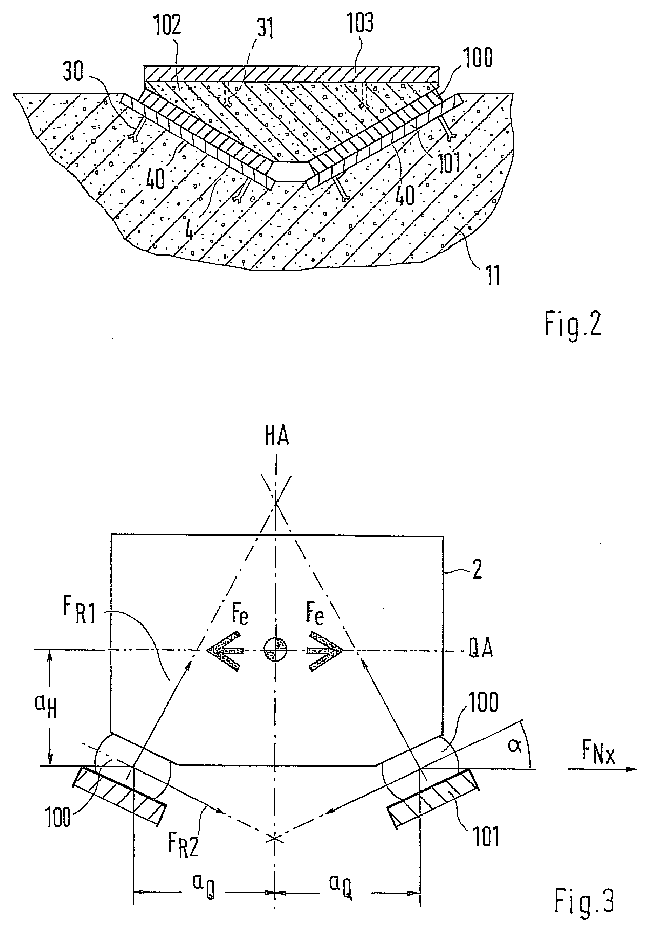

Fig. 1A zeigt eine z. B. auf dem Bodenfundament einer Fabrikhalle aufgestellte Maschine 20, nämlich eine Schmiedepresse, die auf einer Schwingungsisolationseinrichtung 1 gegenüber dem aus Beton bestehenden Fundament 11 schwingungsisoliert gelagert ist. Die Schwingungsisolationseinrichtung 1 weist mehrere Schwingungsisolationseinheiten 10 auf, von denen zwei im Querschnitt zu sehen und eine in perspektivischer Ansicht vergrößert dargestellt ist. Die Isolationseinheiten 10 sind in einer Vertiefung 5 des Betonfundaments 11 angeordnet, deren seitliche Begrenzungsebenen Schrägflächen 40 eines Schräglagers 4 bilden, wie Fig. 2 deutlicher zeigt. Die Schwingungsisolation wird durch elastische und dämpfende Isolierelemente 100 aus Elastomermaterial gebildet, die auf den Schrägflächen 40 des Schräglagers 4 angeordnet sind und gegen die die zu isolierende Masse 2 bildende Maschine 20 über ein die beiden Isolierelemente 100 überbrückendes Druckstück 102 abgestützt ist. Die Unterseite der Maschine 20 ist gegenüber der Oberseite des Fundaments, die den Boden bzw. die Nutzebene (Flur) bildet, lediglich geringfügig gegebenenfalls über vorhandene Füße oder aber lediglich über das mit seiner Oberseite etwas vorstehende Druckstück 102 soweit beabstandet, dass Schwingungen um maximale Schwingungsamplituden noch ungehindert erfolgen können. Infolge der unterflurigen Anordnung der Schrägflächen 40 sind die Bedienkomponenten der Maschine 20 von einer Bedienperson 3, die ebenfalls auf der Nutzebene bzw. Grundebene 0 steht, uneingeschränkt wahrnehmbar bzw. betätigbar.

Wie in Fig. 1A in einem Ersatzschaltbild dargestellt, funktionieren die elastischen und dämpfenden Isolierelemente 100 als Glieder mit Schwingungs- und Dämpfungseigenschaften, wobei die durch die elastischen und dämpfenden Elemente gebildeten Feder-Dämpfer-Systeme zwischen den Maschinenfüßen und dem Betonfundament eine gute Stoß- und Schwingungsisolation dadurch ergeben, dass mit den Isolierelementen 100 tiefe Eigenfrequenzen bewirkt werden, die mit relativ großen Federwegen einhergehen können. Diese wirken sich aber infolge des vertieften Einbaus der Isolationseinheit 10 nicht in einer ungünstigen Verlagerung der Bedienelemente aus, wie dies bei Aufbauten auf der Nutz- bzw. Grundebene 0 der Fall wäre und in Fig. 1B gezeigt ist, in der eine übliche Schwingungsisolationseinrichtung 90 dargestellt ist. Die aufbauende Schwingungsisolationseinrichtung 90 ergibt bei herkömmlicher Ausführung eine ungünstige Höhenverlagerung der Bedieneinrichtung um eine Höhe h1.

Die Isolationseinheiten 10 mit den Schräglagern 4 sind vorliegend, wie die vergrößerte perspektivische Darstellung in Fig. 1A zeigt, nach Art eines liegenden Dreieckprismas ausgestaltet, wobei die Schrägflächen 40 nach unten zueinander geneigt sind. Alternativ könnten die Schrägflächen 40 der Schräglager 4 auch weiter auseinander gezogen sein im Querschnitt etwa entsprechend einem trapezförmigen Prisma. Vorzugsweise bilden die Schrägflächen 40 im Querschnitt Seiten eines gleichschenkligen Dreiecks oder gleichschenkligen Trapezes, wobei die Winkel gegenüber der in Schwerkraftrichtung zeigenden (absoluten) Vertikalen bzw. der dazu rechtwinkligen Horizontalen gleiche Winkel α (vgl. Fig. 3) bilden. Der Hohlraum zwischen den auf den Schrägflächen 40 angeordneten Isolierelementen 100 eines Schräglagers 4 ist mit dem Druckstück 102 ausgefüllt, um eine Stützeinheit 12 unter dem betreffenden Aufstandsbereich, insbesondere Maschinenfuß zu bilden.

Wie Fig. 2 weiter zeigt, sind auf den Schrägflächen 40 des Betonfundaments 11 Metallplatten, vorzugsweise planparallele Stahlplatten 101 aufgebracht und in dem Betonfundament 11 mittels Verankerungselementen 30 befestigt. Im Bereich der Schrägflächen 40 kann vorteilhaft schwundfreier Beton verwendet werden, um die Stabilität des Schräglagers 4 zu erhöhen und eine Zermürbung des Betons und Rissbildungen zu vermeiden. Vorteilhaft werden die Stahlplatten bei der Herstellung des Schräglagers 4 einbetoniert. Sie verteilen den Druck gleichmäßig und großflächig im Beton und nehmen bei der Verformung der Isolierelementen 100, speziell von Elastomeren, auftretende Schubspannungen durch Querdehnungen in der Ebene auf, wodurch die Querdehnungen nicht so stark behindert werden, wie es bei einer reinen Betonoberfläche der Fall ist, so dass die Metallplatten 101 zur Vermeidung von Rissbildungen im Betonfundament 11 beitragen.

Das feste Druckstück 102 kann ebenfalls aus Beton, vorteilhaft mit möglichst geringem Schwund, hergestellt sein. Auf seiner flachen, horizontalen Oberfläche trägt das Druckstück 102 eine planparallele Aufnahmeplatte 103, vorzugsweise ebenfalls aus Metall, insbesondere Stahl, die mittels weiterer Verankerungselemente 30 in dem Druckstück 102 befestigt ist. Alternativ kann das gesamte Druckstück 102 aus Metall hergestellt sein, vor allem, wenn sein Volumen relativ klein ist, wie es z. B. bei Isolationseinheiten 10 für kleinere Maschinen 20 der Fall sein kann. Das Druckstück ergibt eine feste Verbindung zwischen den Isolierelementen 100.

Die Art der schrägen Anordnung der elastischen und der dämpfenden Isolierelemente 100 bzw. der dadurch gebildeten Elastomerfeder ist eine vorteilhafte Ausführung, ein System bzw. die zu lagernde Masse 2, um die horizontalen Achsen zu entkoppeln. Werden die Abstände der durch die Isolierelemente 100 gebildeten Federn zu den Schwerpunktebenen richtig berücksichtigt, kann auf diese Weise die Momenteinwirkung der Federrückstellkräfte so durch die Winkelstellung der Elastomerfedern beeinflusst werden, dass die resultierende elastische Hauptebene in der horizontalen Schwerpunktebene wirksam ist, wie Fig. 3 zeigt. Hierbei sind die Erregerkräfte der Elastomerfedern in horizontaler Richtung mit Fₑ bezeichnet, wobei auch die Federrückstellkräfte in Normalenrichtung der Schrägflächen 40 und parallel zu diesen bzw. zu deren Neigungsrichtung F_{R1}, F_{R2} eingetragen sind. Ferner sind die in Richtung der Vertikalen zeigende Hochachse HA und die rechtwinklig zu dieser in Querrichtung des Schräglagers 4 zeigende Querachse QA dargestellt. Die Schrägflächen 40 sind symmetrisch zu einer vertikalen Mittellängsebene des Schräglagers 4 angeordnet, wobei die Abstände zwischen der vertikalen Mittellängsebene des Schräglagers 4 und den Mittelpunkten der Isolierelemente 100 mit a_{Q} und die Abstände zwischen dem Schwerpunkt der Masse 2 und dem Mittelpunkt der Isolierkörper 100 in Richtung der Hochachse mit a_{H} bezeichnet sind. Eingetragen ist auch eine nach außen wirkende Kraft F_{Nx}, die hier bedeutend ist, da sie im Zusammenhang mit der zwangsläufigen Führung der Federn steht. Die zwangsläufige Führung der Federn ist eine Folge der nach außen wirkenden Kraft F_{Nx}, die aufgrund der festen Verbindung zwischen den beiden schräg gestellten Federn entsteht.

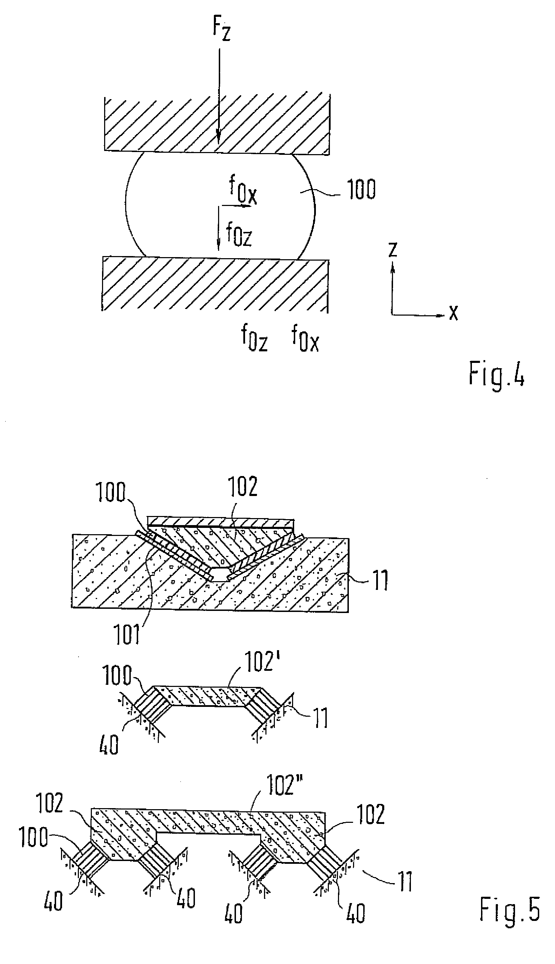

Ein weiterer Vorteil eines Schräglagers 4 ist, dass durch die Schrägstellung der Elastomerfedern die Schubbeanspruchung und die Druckbeanspruchung "kombiniert" werden. Da auf Druck beanspruchte Elastomerfedern in der horizontalen Richtung meist um den Faktor 2 bis 3 "weicher" sind als in der vertikalen Richtung, kann dies genutzt werden, um zum einen die vertikalen Eigenfrequenzen f_{0z} der Elastomerfeder herabzusetzen und gleichzeitig die horizontalen Eigenfrequenzen f₀ₓ, f_{0y} heraufzusetzen, wodurch die darauf gelagerte Maschine stabilisiert wird. Diese Wirkungsweise ist prinzipiell in Fig. 4 dargestellt, worin auf das Isolierelement 100 eine Kraft F_{z} in Normalenrichtung wirkt.

Bei der vorliegenden Schwingungsisolationseinrichtung wird ein solcher Aufbau mit Schräglager 4 vorteilhaft in das Betonfundament 11 integriert, wodurch eine hoch aufbauende, voluminöse, schwer herzustellende und zu handhabende Konstruktion vermieden wird und das Betonfundament 11 eine stabile Basis ohne aufwändige Montage und Verbindungsmaßnahmen bietet. Eine Verschiebung der Lager in horizontaler Richtung oder Verdrehung ist nicht möglich.

Fig. 5 zeigt neben der in Fig. 2 gezeigten, vorstehend beschriebenen Ausbildung eines Schräglagers 4 noch zwei weitere Ausführungsbeispiele für Isoliereinheiten 10. Bei der in der mittleren Abbildung dargestellten Ausführung sind zwei in einem Betonfundament 11 ausgebildete Schrägflächen 40 weiter auseinander gezogen und nehmen elastische und dämpfende Isolierelemente 100, insbesondere aus Elastomermaterial, auf. Der Abstand zwischen den Isolierelementen 100 ist mit einem festen Druckstück in Form eines Brückenteils 102' überbrückt, auf dessen flacher horizontaler Oberseite sich ein großer Aufnahmebereich für eine Masse 2, z. B. eine Maschine 20 oder z. B. ein Bauwerk ergibt. Bei dem Ausführungsbeispiel nach der dritten Darstellung in Fig. 5 wird ein vergrößerter Verbund aus Isolationseinheiten 10 mit mehreren Schräglagern 4 gebildet, die jeweils zwei Schrägflächen 40 des vorstehend beschriebenen Aufbaus umfassen, indem auf zwei Isolierelementen 100 eines Schräglagers 4 ein festes Druckstück 102 aufgebracht ist und auf zwei Druckstücken 102 wiederum ein überspannendes festes Brückenteil 102" aufgesetzt ist. Mit derartigen Konstruktionen lassen sich unterschiedliche Schwingungs-/Dämpfungsanordnungen herstellen, die bei verschieden ausgedehnten Massen 2 einsetzbar sind und günstige Anpassungsmöglichkeiten bieten, wobei mittels der Brückenteile 102', 102" und Druckstücke 102 ein gekoppeltes System zur Schwingungsisolation geeignet aufgebaut werden kann. Wie auch bei den vorstehend beschriebenen Ausführungsbeispielen können die Schrägstellungen der Schrägflächen 40 gegenüber der Horizontalen bzw. Vertikalen mit unterschiedlichem Neigungswinkel α gewählt werden, z. B. in einem Bereich zwischen 20° und 70°. Auch können Isolierelemente 100 mit unterschiedlichen Schwingungs-/Dämpfungseigenschaften eingesetzt werden, wobei diese sich auch aus mehreren parallelen Lagen mit unterschiedlichen Schwingungs-/Dämpfungseigenschaften zusammensetzen können.

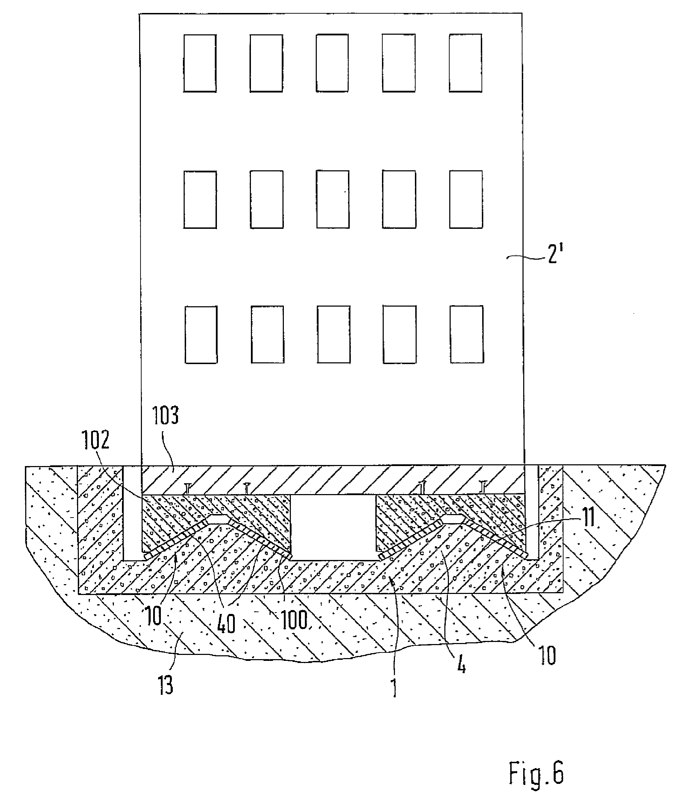

Fig. 6 zeigt als weiteres Ausführungsbeispiel die Lagerung eines Bauwerks 2' auf einer Schwingungsisolationseinrichtung 1. Hierbei weisen Isolationseinheiten 10 ebenfalls in einem Betonfundament 11 ausgebildete Schräglager 4 mit Schrägflächen 40 auf. Die Schrägflächen 40 sind hierbei nach oben schräg zueinander geneigt, wobei das Druckstück auf seiner Unterseite entsprechend hohl ausgebildet ist und mit angepassten Schrägflächen auf den auf den Schrägflächen 40 angeordneten Isolierelemente 100 aufgesetzt ist. Auch hierbei sind die Schräglager 4 mit den Schrägflächen 40 in einer Vertiefung des Betonfundaments 11 angeordnet, das seinerseits in einem Untergrund 13 gelagert ist. Über zwei Druckstücke 102 zweier Schräglager 4 erstreckt sich eine Aufnahmeplatte 103, die mit den Druckstücken 102 mittels Verankerungselementen verbunden ist. Die Druckstücke 102 können ihrerseits vorteilhaft aus Beton hergestellt sein, während die Aufnahmeplatte 103 aus Metall oder ebenfalls aus Beton, z. B. mit Stahlarmierung, hergestellt ist. Im Übrigen kann der Aufbau entsprechend den vorstehend beschriebenen Ausführungsbeispielen ausgeführt sein. Diese Art der Einbringung elastischer und dämpfender Isolierelemente 100 in Verbindung mit einem Bauwerk 2' ergibt z. B. bei hohen schlanken, frei stehenden Gebäuden Vorteile bei der Schwingungsisolierung etwa gegenüber durch Windlast auftretenden horizontal wirkenden Kräften. Die Schwingungsisolationseinrichtung 1 mit den Isolierelementen 100 ermöglicht eine geeignete Anpassung an die Erfordernisse der Schwingungsisolation.

## Patentansprüche

1. Schwingungsisolationseinrichtung zum schwingungsgedämpften Aufnehmen einer Masse (2) mit mindestens einer Isolationseinheit (10), die auf zumindest zwei Schrägflächen (40) mindestens eines Schräglagers (4) angeordnete elastische und dämpfende Isolierelemente (100) trägt, wobei die Schräglager (4) in einem Betonfundament (11) ausgebildet sind und die Schrägflächen (40) durch Formflächen des Betonfundaments (11) gebildet sind und wobei die Schrägflächen (40) in Vertiefungen (5) des Betonfundaments (11) ausgebildet sind, die bezüglich einer Nutzebene (0) unter Flur liegen,
**dadurch gekennzeichnet,**
**dass** auf den Schrägflächen (40) des Betonfundaments (11) Metallplatten (101) mittels Verankerungselemente (30) befestigt sind, auf denen die Isolierelemente (100) aufgebracht sind,
**dass** die Isolierelemente (100) eines Schräglagers schwingungstechnisch über eine Druckeinheit (102, 102', 102") miteinander gekoppelt sind,
**dass** die Druckeinheit (102, 102', 102") als Druckstück aus Metall oder Beton ausgebildet ist und
**dass** bei Ausbildung aus Beton auf einer Oberseite der Druckeinheit (102, 102', 102") eine Metallplatte verankert ist.

2. Schwingungsisolationseinrichtung nach Anspruch 1,
**dadurch gekennzeichnet,**
**dass** die Schrägflächen (40) eines jeweiligen Schräglagers (4) nach Art von gegeneinander geneigten Seitenflächen eines dreieckförmigen oder trapezförmigen Prismas angeordnet sind, das bezüglich der in Schwerkraftrichtung zeigenden absoluten Vertikalen horizontal ausgerichtet ist, wobei die beiden Schrägflächen (40) nach unten oder nach oben zueinander gerichtet sind.

3. Schwingungsisolationseinrichtung nach Anspruch 1 oder 2,
**dadurch gekennzeichnet,**
**dass** die Schrägflächen (40) eines jeweiligen Schräglagers (4) nach Art von gegeneinander gerichteten Seitenflächen einer Pyramide oder eines Pyramidenstumpfes angeordnet und nach oben oder nach unten zueinander geneigt sind.

4. Schwingungsisolationseinrichtung nach einem der vorhergehenden Ansprüche, **dadurch gekennzeichnet,**
**dass** die Schrägflächen (40) von zumindest Abschnitten seitlicher Begrenzungsflächen der Vertiefungen (5) gebildet sind oder
**dass** sie an nach oben gerichteten Abschnitten des Betonfundamentes (11) gebildet sind.

5. Schwingungsisolationseinrichtung nach Anspruch 1,
**dadurch gekennzeichnet,**
**dass** die Druckeinheit (102, 102', 102") auf ihrer Oberseite mit einer ebenen Auflagefläche versehen ist.

6. Schwingungsisolationseinrichtung nach einem der vorhergehenden Ansprüche, **dadurch gekennzeichnet,**
**dass** mehrere Schräglager (4) über ein Brückenteil (102', 102") zu einem Schräglagerverbund miteinander gekoppelt sind.

7. Schwingungsisolationseinrichtung nach Anspruch 6,
**dadurch gekennzeichnet,**
**dass** ein vergrößerter Verbund aus Isolationseinheiten (10) mit mehreren Schräglagern (4) gebildet ist, die jeweils zwei Schrägflächen (40) umfassen, indem auf zwei Isolierelementen (100) eines Schräglagers (4) ein festes Druckstück (102) aufgebracht ist und auf zwei Druckstücken (102) das überspannende feste Brückenteil (102") aufgesetzt ist.

8. Schwingungsisolationseinrichtung nach einem der vorhergehenden Ansprüche,
**dadurch gekennzeichnet,**
**dass** die Neigungswinkel (α) der Schrägflächen (40) in einer vertikalen Querebene gegenüber der Horizontalen gleich groß sind.

9. Schwingungsisolationseinrichtung nach einem der vorhergehenden Ansprüche, **dadurch gekennzeichnet,**
**dass** im Bereich der Schrägflächen (40) das Betonfundament (11) aus schwundfreiem Beton hergestellt ist.

10. Schwingungsisolationseinrichtung nach einem der vorhergehenden Ansprüche, **dadurch gekennzeichnet,**
**dass** die Isolierelemente (100) als plattenartige Elastomerkörper mit parallel zur zugeordneten Schrägfläche (40) liegender Oberseite und Unterseite ausgebildet sind.

11. Schwingungsisolationseinrichtung nach Anspruch 10,
**dadurch gekennzeichnet,**
**dass** die Elastomerkörper verschiedene Lagen von Elastomermaterial mit unterschiedlichen Schwingungs-/Dämpfungseigenschaften aufweisen.

## Claims

1. A vibration isolation device for vibration-damped receiving of a mass (2) having at least one isolation unit (10), which has elastic and damping isolation units (100) located on at least two oblique faces (40) of at least one oblique bearing (4), the oblique bearings (4) being embodied in a concrete foundation (11), the oblique faces (40) being formed by shaping faces of the concrete foundation (11), and the oblique faces (40) being embodied in indentations (5) in the concrete foundation (11) that are located below floor level relative to a work plane (0),
**characterized in that**
metal plates (101) are secured to the oblique faces (40) of the concrete foundation (11) by means of anchoring elements (30), on which the isolation units (100) are mounted,
that the isolation units (100) of an oblique bearing are coupled together in terms of vibration via a pressure unit (102, 102', 102");
that the pressure unit (102, 102', 102") is embodied as a pressure piece of metal or concrete; and
that in the embodiment of concrete, a metal plate is anchored to an upper side of the pressure unit (102, 102', 102").

2. The vibration isolation device of claim 1,
**characterized in that**
the oblique faces (40) of each oblique bearing (4) are located in the manner of side faces, inclined relative to one another, of a triangular or trapezoidal prism, which is oriented horizontally relative to the absolute vertical pointing in the direction of gravity, and the two oblique faces (40) are oriented upward or downward relative to one another.

3. The vibration isolation device of claim 1 or 2,
**characterized in that**
the oblique faces (40) of each oblique bearing (4) are located in the manner of side faces, inclined relative to one another, of a pyramid or a truncated pyramid and are inclined upward or downward relative to one another.

4. The vibration isolation device of one of the foregoing claims, **characterized in that**
the oblique faces (40) are embodied by at least portions of lateral boundary faces of the indentations (5), or
that they are formed on upward-oriented portions of the concrete foundation (11).

5. The vibration isolation device of claim 1,
**characterized in that**
the pressure unit (102, 102', 102") is provided on its upper side with a flat support surface.

6. The vibration isolation device of one of the foregoing claims, **characterized in that**
a plurality of oblique bearings (4) are coupled with one another via a bridge part (102', 102") to form a composite oblique bearing.

7. The vibration isolation device of claim 6,
**characterized in that**
an enlarged composite comprising isolation units (10) with a plurality of oblique bearings (4) is formed, which each include two oblique faces (40), **in that** a fixed pressure piece (102) is mounted on two isolation units (100) of an oblique bearing (4), and the fixed bridge part (102") spanning the isolation units is placed on two pressure pieces (102).

8. The vibration isolation device of one of the foregoing claims,
**characterized in that**
the angles of inclination (α) of the oblique faces (40) in a vertical transverse plane relative to the horizontal are of equal size.

9. The vibration isolation device of one of the foregoing claims, **characterized in that**
in the vicinity of the oblique faces (40), the concrete foundation (11) is made from non-shrink concrete.

10. The vibration isolation device of one of the foregoing claims, **characterized in that**
the isolation units (100) are embodied as platelike elastomer bodies with an upper side and lower side located parallel to the associated oblique face (40).

11. The vibration isolation device of claim 10,
**characterized in that**
the elastomer bodies have various layers of elastomer material with different vibration/damping properties.

## Revendications

1. Dispositif d'isolation contre les vibrations pour la réception amortie en vibrations d'une masse (2), comportant au moins une unité d'isolation (10) qui porte des éléments isolants (100) élastiques et amortisseurs disposés sur au moins deux surfaces obliques (40) d'au moins un palier à contact oblique (4), les paliers à contact oblique (4) étant réalisés dans une fondation en béton (11) et les surfaces obliques (40) étant formées par des surfaces profilées de la fondation en béton (11) et les surfaces obliques (40) étant réalisées dans des renfoncements (5) de la fondation en béton (11) qui sont enterrés par rapport à un plan utile (0),
**caractérisé en ce**
**que** des plaques métalliques (101), sur lesquelles les éléments isolants (100) sont appliqués, sont fixées sur les surfaces obliques (40) de la fondation en béton (11) au moyen d'éléments d'ancrage (30),
**que** les éléments isolants (100) d'un palier à contact oblique sont couplés entre eux du point de vue vibratoire par une unité de pression (102, 102', 102"),
**que** l'unité de pression (102, 102', 102") est réalisée sous la forme d'une pièce de pression en métal ou béton et
**que** si elle est réalisée en béton, une plaque métallique est ancrée sur une face supérieure de l'unité de pression (102, 102', 102").

2. Dispositif d'isolation contre les vibrations selon l'une des revendications 1,
**caractérisé en ce**
**que** les surfaces obliques (40) d'un palier à contact oblique (4) respectif sont disposées à la manière de faces latérales inclinées les unes par rapport aux autres d'un prisme triangulaire ou trapézoïdal qui est orienté horizontalement par rapport à la verticale absolue pointant dans la direction de la pesanteur, les deux surfaces obliques (40) étant dirigées vers le bas ou vers le haut l'une par rapport à l'autre.

3. Dispositif d'isolation contre les vibrations selon l'une des revendications 1 ou 2,
**caractérisé en ce**
**que** les surfaces obliques (40) d'un palier à contact oblique (4) respectif sont disposées à la manière de faces latérales dirigées les unes vers les autres d'une pyramide ou d'une pyramide tronquée et sont inclinées vers le bas ou vers le haut l'une par rapport à l'autre.

4. Dispositif d'isolation contre les vibrations selon l'une des revendications précédentes, **caractérisé en ce**
**que** les surfaces obliques (40) sont formées au moins de parties de surfaces de délimitation latérales des renfoncements (5) ou
**qu'**elles sont formées sur des parties dirigées vers le haut de la fondation en béton (11).

5. Dispositif d'isolation contre les vibrations selon la revendication 1,
**caractérisé en ce**
**que** l'unité de pression (102, 102', 102") est pourvue d'une surface d'appui plane sur sa face supérieure.

6. Dispositif d'isolation contre les vibrations selon l'une des revendications précédentes, **caractérisé en ce**
**que** plusieurs paliers à contact oblique (4) sont couplés entre eux en un système de paliers à contact oblique par une partie de pontage (102', 102").

7. Dispositif d'isolation contre les vibrations selon la revendication 6,
**caractérisé en ce**
**qu'**un système plus grand est formé d'unités d'isolation (10) avec plusieurs paliers à contact oblique (4), qui comprennent chacun deux surfaces obliques (40), en appliquant une pièce de pression fixe (102) sur deux éléments isolants (100) d'un palier à contact oblique (4) et en posant la partie de pontage fixe (102") à cheval sur deux pièces de pression (102).

8. Dispositif d'isolation contre les vibrations selon l'une des revendications précédentes, **caractérisé en ce**
**que** les angles d'inclinaison (α) des surfaces obliques (40) par rapport à l'horizontale sont identiques dans un plan transversal vertical.

9. Dispositif d'isolation contre les vibrations selon l'une des revendications précédentes, **caractérisé en ce**
**que** dans la zone des surfaces obliques (40), la fondation en béton (11) est réalisée en béton sans retrait.

10. Dispositif d'isolation contre les vibrations selon l'une des revendications précédentes, **caractérisé en ce**
**que** les éléments isolants (100) sont réalisés sous la forme de corps en élastomère en forme de plaque dont la face supérieure et la face inférieure sont parallèles à la surface oblique (40) associée.

11. Dispositif d'isolation contre les vibrations selon la revendication 10,
**caractérisé en ce**
**que** les corps en élastomère présentent différentes couches de matériau élastomère ayant différentes propriétés de vibration/d'amortissement.
